# EUROPEAN PATENT APPLICATION

(11) **EP 2 320 590 A1**
(43) Date of publication of application: **11.05.2011**
(21) Application number: 09809250.5
(22) Date of filing: 27.08.2009
(51) Int. Cl.: H04L 1/08

(54) **METHOD, DEVICE AND SYSTEM FOR IMPLEMENTING RETRANSMISSION IN PHYSICAL LAYER**

(30) Priority: 01.09.2008 CN 200810146611
(71) Applicant: Huawei Technologies Co., Ltd., Longgang District, Shenzhen Guangdong 518129 (CN)
(72) Inventor: WU, Anni, Longgang District 518129 Shenzhen (CN)
(74) Representative: Kreuz, Georg Maria
(86) International application number: PCT/CN2009/073573
(87) International publication number: WO 2010/022665

(57) **Abstract**

A method for implementing retransmission in a physical layer is provided, which include: when a data block in a retransmission queue meets a predefined condition, querying state information of the data block, in which the state information of the data block refers to the information obtained by analyzing return information of the data block transmitted by a receiver; and, if the state information of the data block indicates that the state of the data block is uncertain, retransmitting the data block according to the predefined rule. A device for implementing retransmission in a physical layer and a digital subscriber line (DSL) communication system are further provided. According to the technical solutions, an autonomous retransmission operation is triggered according to the predefined condition, thus preventing the situation that the receiver cannot process the corresponding data in time due to data loss, and reducing a bit error rate (BER) of the system.

## Description

### FIELD OF THE INVENTION

The present invention relates to the field of communications technologies, and in particular, to a method, device, and system for implementing retransmission in a physical layer in Digital Subscriber Line (DSL) technology.

### BACKGROUND OF THE INVENTION

Solutions of retransmission in a physical layer are capable of protecting an x digital subscriber line (xDSL) system from being affected by impulse noise. In the solutions of retransmission in a physical layer in the prior art, if a data confirmation message or a retransmission request message is valid, and it is confirmed that retransmission is required, corresponding data is retransmitted, and otherwise, the message is discarded. When the confirmation message or the retransmission request message transmitted in a return channel is damaged due to interferences of the impulse noise, a data transmitter discards the message because it fails to correctly analyze the confirmation message or the retransmission request message, and the data transmitter does not retransmit corresponding data in such case, so a receiver may not be able to correctly perform corresponding data processing in time.

Accordingly, two solutions exist in the prior art.

One solution is to increase a reserved noise margin of the return channel. However, when the impulse noise is enhanced, the solution fails to effectively protect the return channel.

The other solution is to predict an occurrence time and a time duration of a periodic impulse noise, at the moment that the predicted impulse noise occurs, a pre-determined data is used to replace the data to be transmitted, and after the moment that the predicted impulse noise occurs, normal data transmission is recovered, so as to protect the data to be transmitted in the return channel. Although the interferences on the data caused by periodic impulse noise can be prevented by adopting the solution, the interferences and damages on the data caused by non-periodic impulse noise cannot be prevented. Furthermore, in practical situations, the impulse noise does not have strict periodicity, so the solution does not have desired protection effects on the return channel.

However, the prior art has the following problems:
Both solutions in the prior art are implemented in consideration of protecting the return channel, so that the data transmitter can receive and correctly analyze return information. However, because the protection effects on the return channel are not desired, and the solutions cannot comprehensively and effectively ensure that the data transmitter receives complete return information, the data transmitter still discards the return information when failing to correctly analyze the return information, resulting in data loss, so the receiver cannot correctly perform corresponding data processing in time, and therefore a bit error rate (BER) of the system is increased.

### SUMMARY OF THE INVENTION

The present invention provides a method and a device for implementing retransmission in a physical layer, so as to prevent increase of a BER of a system because a receiver fails to process corresponding data.

According to the first aspect of the present invention a method for implementing retransmission in a physical layer includes:
querying state information of the data block when a data block in a retransmission queue meets a predefined condition, where the state information of the data block refers to information obtained by analyzing return information of the data block transmitted by a receiver; and
retransmitting the data block according to a predefined rule if the state information of the data block is that a receiving state is uncertain.

According to the second aspect of the present invention a device for implementing retransmission in a physical layer includes:
a state query module, configured to query state information of a data block when a data block in a retransmission queue meets a predefined condition, where the state information of the data block refers to information obtained by analyzing return information of the data block transmitted by a receiver; and
an autonomous retransmission processing module, configured to retransmit the data block according to a predefined rule when the state information of the data block obtained by the state query module is that a receiving state is uncertain.

According to the third aspect of the present invention a digital subscriber line (DSL) communication system includes:
a data transmitter, configured to transmit a data block to a data receiver;
the data receiver, configured to receive the data block transmitted by the data transmitter, and transmit return information of the data block to the data transmitter; and
a data retransmission device, configured to obtain the return information of the data block, and obtain state information of the data block by analyzing the return information of the data block, query state information of the data block when it is detected that the data block in a retransmission queue meets a predefined condition, and retransmit the data block according to a predefined rule when the state information of the data block indicates that a receiving state is uncertain.

It can be seen from the technical solutions according to the present invention that, because the retransmission operation is triggered according to a predefined condition, an autonomous retransmission solution is realized when an information receiving state fails to be determined, thus effectively preventing increase of a BER of the system due to data loss, and therefore improving quality of user experience.

### BRIEF DESCRIPTION OF THE DRAWINGS

FIG. 1 is a schematic diagram of a processing process according to Embodiment 1 of the present invention;
FIG. 2 is a schematic diagram of a processing process according to Embodiment 2 of the present invention;
FIG. 3 is a schematic diagram of a processing process according to Embodiment 3 of the present invention;
FIG. 4 is a schematic structural view of a device according to an embodiment of the present invention; and
FIG. 5 is a schematic structural view of a DSL communication system according to an embodiment of the present invention.

### DETAILED DESCRIPTION OF THE EMBODIMENTS

A data transmitter transmits a data block to a receiver, and the data block enters a retransmission queue; after receiving the data block, the receiver transmits return information to the transmitter. In an embodiment of the present invention, when the data block in the retransmission queue meets a predefined condition, state information of the data block is queried, where the state information of the data block refers to information obtained by analyzing the return information of the data block transmitted by the receiver; and if the state information of the data block indicates that a receiving state is uncertain, the data block is retransmitted according to a predefined rule. A data granularity of the data block in the retransmission queue may be a whole symbol or a part of a symbol, or data information with a fixed length, where one data block corresponds to one data granularity.

In an embodiment of the present invention, the state information of the data block refers to information obtained by analyzing return information of the data block transmitted by the receiver, and specifically to the information about whether the data block is correctly received by the receiver. The state information includes three types of state information: the data block is correctly received, the data block received by the receiver is damaged, and the receiving state is uncertain. The state information of the data block is specifically obtained by analyzing the return information transmitted by the receiver, for example, when a confirmation mechanism is adopted to confirm the data transmitted by the data transmitter, the receiver transmits data confirmation information through a return channel, the data transmitter may acquire the state information of the data block by analyzing the data confirmation information; when a non-confirmation mechanism is adopted to confirm the data transmitted by the data transmitter, if failing to correctly receive the data block, the receiver transmits retransmission request information through the return channel, and the data transmitter acquires that the state information of the data block indicates that "the data block received by the receiver is damaged" by analyzing the retransmission request information. Furthermore, for the correctly received data block, the receiver transmits return information in a specific format through the return channel to describe that a certain or some data blocks are correctly received, and the data transmitter acquires that the state information of the corresponding data blocks is that "the data block is correctly received" by analyzing the return information in the specific format. Accordingly, the receiving state of the data block being uncertain specifically includes:
the return information of the data block transmitted by the receiver is not found; or,
the return information of the data block transmitted by the receiver fails to be correctly analyzed, for example, due to the influence of impulse noise or other reasons, the return information of the data block received by the data transmitter is damaged and therefore fails to be correctly analyzed.

In an embodiment of the present invention, it is determined whether the data block in the retransmission queue meets a predefined condition, and in practical application, all the data blocks in the retransmission queue are determined, or only the data block of which the receiving state is uncertain is determined.

In an embodiment of the present invention, the operation of retransmitting the data block according to the predefined rule includes:
transmitting confirmation request information of the data block to a receiver, and if return information about the confirmation request information of the data block is not received or fails to be correctly analyzed when the data block in a retransmission queue meets a predefined condition, retransmitting the data block, where the confirmation request information is used to request the return information of the data block from the receiver, and the meeting the predefined conditions refers to that the data block reaches another designated position in the retransmission queue, or the data block in the retransmission queue reaches another predefined time after relevant information of the data block is transmitted to the receiver;
   or,
transmitting confirmation request information of the data block to a receiver, and determining whether to retransmit the data block according to received return information about the confirmation request information of the data block, where the return information for the confirmation request information may be a confirmation message in a confirmation mechanism, and may be a retransmission request message or return information in a specific format indicating that the data block is correctly received in a non-confirmation mechanism. Taking the confirmation mechanism as an example, the retransmission operation is not triggered when the return information about the confirmation request information of the data block indicates that the data block is correctly received, and the data block is retransmitted when the return information of the relevant information of the data block indicates that the errors occur to reception of the data block;
   or,
retransmitting the data block, directly.

In an embodiment of the present invention, the data block in the retransmission queue meeting the predefined condition refers to that:
the data block reaches a predefined position in the retransmission queue, where the predefined position is a pre-designated position in the retransmission queue, for example, the predefined position refers to an outlet of the retransmission queue, and the position may be set according to practical conditions in practical application; or, the data block reaches a predefined time after entering the retransmission queue; or, after the relevant information of the data block is transmitted to the receiver, the data block reaches a predefined time or a predefined position in the retransmission queue.

The data block in the embodiment of the present invention may be one or more data blocks, and in the case of multiple data blocks, the operation of retransmitting the data block according to the predefined rule includes selecting all or part of the data blocks for retransmission according to the predefined rule.

Compared with the prior art, the present invention has the following beneficial effects:
In the solution by improving the noise margin of the return channel in the prior art, data loss is prevented by protecting the return channel, so a data transmission rate of the return channel is low, and the return channel cannot be effectively protected from being interfered by strong impulse noise, thus resulting in increase of the system delay, jitter, and BER due to the influences of the strong impulse noise, and decreasing the quality of experience (QoE) of the user. In the technical solutions according to the embodiment of the present invention, when the state of the data at the receiver fails to be acquired, autonomous retransmission is performed, thus preventing data loss due to the interference of impulse noise, reducing the system delay, jitter, and BER, improving stability of the system operation, and increasing the QoE of the user. Furthermore, because in the technical solutions according to the embodiments of the present invention, the return channel does not need additional configuration, that is, the noise margin of the return channel does not need to be increased, the system operation rate is increased.

In the solution in which the return channel is protected by predicting the occurrence time and time duration of periodic impulse noise in the prior art, the solution is merely effective for periodic impulse noise, while in practical application, the impulse noise does not have strict periodicity, so the solution cannot protect the channel comprehensively, system delay, jitter, and BER are still increased due to the influences of the impulse noise, and the QoE of the user is decreased. However, the technical solutions according to the embodiments of the present invention are not influenced by the impulse noise periodicity, and are applicable to both periodic impulse noise and non-periodic impulse noise, thus preventing the constraints on the periodicity of the impulse noise in the prior art, and preventing data loss due to the interferences of the impulse noise, so the system delay, jitter, and BER are decreased, the stability of the system operation is improved, and the QoE of the user is increased.

Hereinafter, the implementation modes of the present invention in practical application are described in detail with reference to the accompanying drawings.

### Embodiment 1

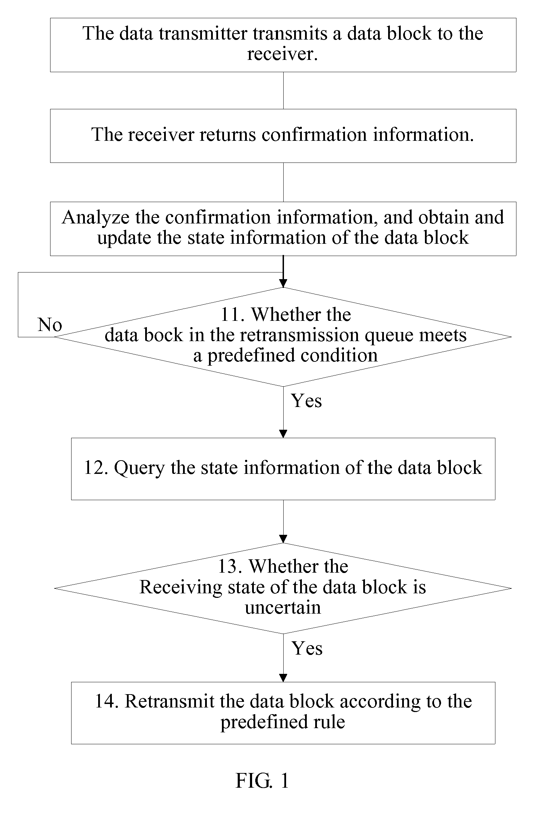

A data transmitter transmits a data block to a receiver, and the data block enters a retransmission queue, where a data granularity of the data block in the retransmission queue may be a whole symbol, a part of a symbol, and data information with a fixed length. One data block corresponds to one data granularity. When the retransmission solution in this embodiment of the present invention is adopted, a confirmation mechanism is adopted to confirm the data block transmitted by the data transmitter, that is, upon receiving one data block, the receiver returns confirmation information to the data transmitter according to the received data information of the data block, where the confirmation information is used to indicate whether the data block is correctly received. After receiving the confirmation information, the data transmitter analyzes the confirmation information, obtains and updates the state information of the data block, where the state information of the data block includes three types: the data block is correctly received, the data block received by the receiver is damaged, and the receiving state is uncertain. If the confirmation information of the data block is not received or fails to be correctly analyzed, the state information of the data block indicates that the receiving state of the data block is uncertain. The procedure for processing the data block according to Embodiment 1 of the present invention is shown in FIG. 1, and includes the following steps:
Step 11: Detect whether the data block in the retransmission queue meets a predefined condition, and if yes, perform step 12, where the meeting the predefined condition includes, but not limited to: the data block reaches a pre-designated position in the retransmission queue, or the data block reaches a predefined time in the retransmission queue.
Step 12: Query the state information of the data block, where the state information of the data block is obtained through an analysis operation in advance.
Step 13: Discard the data block in the retransmission queue if the state information of the data block shows that the receiver correctly receives the data block, retransmit the data block if the state information of the data block shows that the receiver does not correctly receive the data bloc, and perform step 14 if the state information of the data block shows that the receiving state of the data block is uncertain.
Step 14: Retransmit the data block according to the predefined rule.

The operation of retransmitting the data block according to the predefined rule in step 14 includes: transmitting confirmation request information of the data block to the receiver, and according to the content of the received return information, determining whether to retransmit the data block; or, retransmitting the data block directly.

According to Embodiment 1 of the present invention, because the retransmission operation is triggered according to the predefined condition, the autonomous retransmission solution when the information receiving state fails to be determined is realized, so increase of the BER of the system due to data loss is effectively prevented, and the QoE of the user is improved.

### Embodiment 2

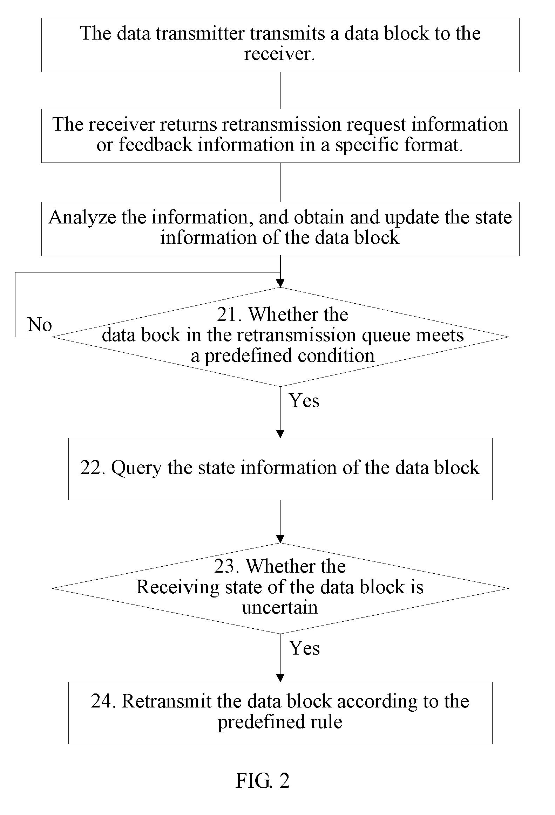

A data transmitter transmits a data block to a receiver, and the data block enters a retransmission queue, where a data granularity of the data block in the retransmission queue may be a whole symbol, a part of a symbol, and data information with a fixed length. One data block corresponds to one data granularity. When the retransmission solution in this embodiment of the present invention is adopted, a non-confirmation mechanism is adopted to confirm the data block transmitted by the data transmitter, that is, upon receiving one damaged data block, the receiver transmits retransmission request information corresponding to the damaged data block, and furthermore, for the correctly received data block, the receiver transmits return information in a specific format through the return channel to describe that a certain data block or some data blocks are correctly received. The data transmitter analyzes the received retransmission request information or the return information in a specific format, obtains and updates the state information of the corresponding data block, where the state information of the data block includes three types: the data block is correctly received, the data block received by the receiver is damaged, and the receiving state of the data block is uncertain. If no return information (including the return information in a specific format indicating that the data block is correctly received and the retransmission request information) is received or the retransmission request information or the return information in a specific format indicating that the data block is correctly received fails to be correctly analyzed, the receiving state of the corresponding data block is uncertain. If the data transmitter cannot correctly analyze the retransmission request information due to damages of the impulse noise, one or more data blocks before the data block corresponding to the latest received correct retransmission request information in the retransmission queue need to be retransmitted. The procedure for processing the data block corresponding to the damaged retransmission request information according to Embodiment 2 of the present invention is shown in FIG. 2, and includes the following steps:
Step 21: Detect whether the data block in the retransmission queue meets a predefined condition, and if yes, perform step 22, where the meeting the predefined conditions includes, but not limited to: the data block reaches a pre-designated position in the retransmission queue, or the data block reaches a predefined time in the retransmission queue.
Step 22: Query the state information of the data block, where the state information of the data block is obtained through previous analysis operation.
Step 23: Discard the data block in the retransmission queue if the state information of the data block shows that the receiver correctly receives the data block, retransmit the data block if the state information of the data block shows that the receiver does not correctly receive the data block, and perform step 24 if the state information of the data block shows that the receiving state of the data block is uncertain.
Step 24: Retransmit the data block according to the predefined rule.

The operation of transmitting the data block according to the predefined rule in step 24 includes: transmitting confirmation request information of the data block to the receiver, and determining whether to retransmit the data block according to the content of the received return information; or, retransmitting the data block directly.

According to Embodiment 2 of the present invention, because the retransmission operation is triggered according to the predefined condition, autonomous retransmission solution when the information receiving state fails to be determined is realized, so increase of a BER of the system due to data loss is effectively prevented, and the QoE of the user is improved.

### Embodiment 3

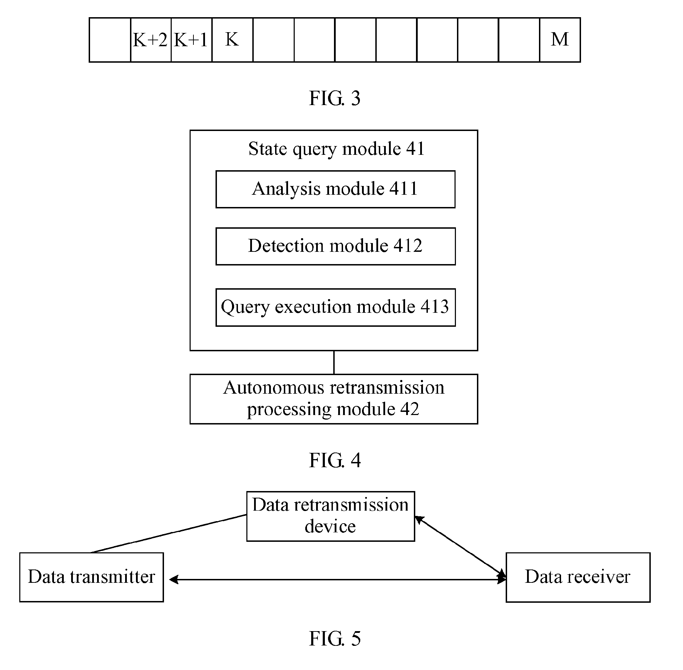

In the processing process according to Embodiment 2, if the data transmitter cannot correctly analyze the retransmission request information due to damages of impulse noise, one or more data blocks in the several data blocks before the data block corresponding to the latest received correct retransmission request information in the retransmission queue need to be retransmitted. In some cases, for example, when the content of the return information in a specific format indicating that the data block is correctly received is that "the data block between two pieces of retransmission request information is correctly received", and one piece of the retransmission request information fails to be correctly analyzed, or if the retransmission request information that fails to be correctly analyzed and the return information in a specific format indicating that the data block is correctly received exists before the latest correctly analyzed retransmission request information, it cannot be acquired which data block or data blocks need to be retransmitted. In order to ensure that the data block that needs to be retransmitted is transmitted to the receiver, improvements are made in Embodiment 3 based on Embodiment 2. In the retransmission queue shown in FIG. 3, a data block M is a data block that meets the predefined condition, and when step 23 is performed, if the receiving state of the data block M is uncertain, the corresponding processing process includes the following steps:
Step 31: Query the state information of subsequent data blocks to find the data block having the certain state information (for example, the state of the data block is that the data block is correctly received), in the embodiments of the present invention, the data block is a data block (K, K+2) in the retransmission queue, so a start data block corresponding to the damaged retransmission request information is one data block or some data blocks before the data block (K, K+2).
Step 32: According to the predefined rule, retransmit all or a part of the data blocks before the data block (K, K+2).
Step 32 may be any one of the following operations.
Step 32a: Transmit the relevant information to the receiver, where the relevant information is used to query the receiver whether the data blocks before the data block (K, K+2) are correctly received, and if the return information for the relevant information is still not received when the data blocks before the data block (K, K+2) meet additional predefined conditions, all the data blocks before the data block (K, K+2) are retransmitted.
Step 32b: Transmit the relevant information to the receiver, where the relevant information is used to query the receiver whether the data blocks before the data block (K, K+2) are correctly received, and if the return information for the relevant information is still not received when the data blocks before the data block (K, K+2) meet additional predefined conditions, a part of the data blocks before the data block (K, K+2) are selected according to a preset calculation method for retransmission.
Step 32c: Retransmit all the data blocks before the data block (K, K+2).
Step 32d: Select a part of the data blocks before the data block (K, K+2) according to a preset calculation method for retransmission.

The data blocks before the data block (K, K+2) meeting additional predefined conditions may refer to that a certain (for example, the first or the last) data block reaches a designated position or a predefined time.

According to Embodiment 3 of the present invention, several data blocks of which the receiving states fails to be determined according to the predefined rule are retransmitted, so increase of a BER of the system due to data loss is prevented, and the QoE of the user is improved.

### Embodiment 4

In the processing process of autonomous retransmission according to Embodiment 4 of the present invention, when the state of a data block at a receiver fails to be determined when the data block meets a predefined condition, the data block is retransmitted according to a predefined rule. The retransmission of the data block according to the predefined rule includes any one of the following steps:
A data transmitter transmits confirmation request information to the receiver; and
the data block is retransmitted if return information for the confirmation request information is still not received when the data block reaches another designated position or another predefined time in the retransmission queue.

Or, a data transmitter transmits confirmation request information to a receiver; and
the data block is retransmitted if confirmation request information for the return information of the data block fails to be correctly analyzed when the data block reaches another designated position or another predefined time in the retransmission queue.

Or,
a data transmitter transmits confirmation request information to a receiver; and
the return information for the confirmation request information is received and analyzed, if the return information for the confirmation request information shows that the corresponding data block is correctly received, the corresponding data block is not retransmitted, and if the return information for the confirmation request information shows that the corresponding data block is not correctly received, the corresponding data block is retransmitted.

Or,
the data block is directly retransmitted.

During confirmation of the data block transmitted by the data transmitter by using a confirmation mechanism, the return information for the confirmation request message may be a confirmation message; and during confirmation of the data block transmitted by the data transmitter by using a non-confirmation mechanism, the return information for the confirmation request message may be retransmission request information.

All or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium capable of storing program codes such as a read-only memory (ROM), a random access memory (RAM), a magnetic disk, and an optical disk.

An embodiment of the present invention provides a device for implementing retransmission in a physical layer, a structure of which is shown in FIG. 4, and a specific structure includes:
a state query module 41, configured to query state information of a data block when the data block in a retransmission queue meets a predefined condition, where the state information of the data block refers to information obtained by analyzing return information of the data block transmitted by the receiver; and
an autonomous retransmission processing module 42, configured to retransmit the data block according to a predefined rule when the state information of the data block obtained by the state query module 41 is that the a receiving state of the data block is uncertain, where a data granularity of the data block in the retransmission queue is a whole symbol or a part of a symbol, and one data block corresponds to one data granularity.

The state information of the data block refers to the information about whether the data block is correctly received by the receiver, and includes: the data block is correctly received, an error occurs on the data block received by the receiver, and the receiving state of the data block is uncertain.

Accordingly, the state information of the data block obtained by the state query module 41 being that the receiving state of the data block is uncertain includes: the return information of the data block transmitted by the receiver is not found; or, the return information of the data block transmitted by the receiver fails to be correctly analyzed, for example, due to the influences of impulse noise or other reasons, the return information of the data block received by the data transmitter is damaged and fails to be correctly analyzed.

In the device in this embodiment of the present invention, the autonomous retransmission processing module 42 is configured to:
send the confirmation request information of the data block to the receiver, if the return information about the confirmation request information of the data block is not received or fails to be correctly analyzed when the data block in the retransmission queue meets a predefined condition, retransmit the data block, where the confirmation request information is used to request the return information of the data block from the receiver, and the return information for the confirmation request information may be confirmation information in the confirmation mechanism and may also be retransmission request information in the non-confirmation mechanism. The meeting the predefined condition can be determined through the state query module 41, that is, the data block reaches another designated position in the retransmission queue, or after the corresponding information of the data block is transmitted to the receiver, the data block in the retransmission queue reaches another predefined time or a predefined position;
   or,
send the confirmation request information of the data block to the receiver, and determine whether to retransmit the data block according to the received return information about the confirmation request information of the data block, for example, when the return information about the confirmation request information of the data block indicates that the data block is correctly received, trigger the retransmission operation, and when the return information about the confirmation request information of the data block indicates that an error occurs on the data block, retransmit the data block;
   or,
   retransmit the data block directly.

In the device of this embodiment, the state query module 41 further includes an analysis module 411, a detection module 412, and a query execution module 413. The analysis module 411 is configured to analyze the return information of the data block and the return information about the confirmation request information of the data block, and update the state information of the data block; the detection module 412 is configured to trigger the query execution module 412 when the data block in the retransmission queue meets the predefined condition; and the query execution module 413 is configured to query the state information of the data block. In an embodiment of the present invention, the data block in the retransmission queue meeting the predefined condition refers to that the data block reaches a predefined position in the retransmission queue, where the predefined position is a pre-designated position in the retransmission queue, for example, the predefined position refers to an outlet of the retransmission queue, and may be set according to practical conditions in practical application; or, the data block reaches a predefined time after entering the retransmission queue; or, after the relevant information of the data block is transmitted to the receiver, the data block reaches a predefined time or a predefined position in the retransmission queue.

In an embodiment of the present invention, one or multiple data blocks may exist, and in the case of multiple data blocks, the autonomous retransmission processing module is specifically configured to select all or part of the data blocks for retransmission according to the predefined rule.

An embodiment of the present invention provides a DSL communication system, the structure of which is shown in FIG. 5. The structure includes:
a data transmitter, configured to transmit a data block to a data receiver, where the data block enters a retransmission queue after transmission;
a data receiver, configured to receive the data block transmitted by the data transmitter, and transmit return information of the data block to the data transmitter, where the return information is used to describe a state of the data block in the data receiver, for example, in a confirmation mechanism, the return information is confirmation information, and in a non-confirmation mechanism, the return information is retransmission request information; and
a data retransmission device, configured to obtain the return information of the data block, and obtain state information of the data block by analyzing the return information of the data block, when it is detected that the data block in the retransmission queue meets the predefined condition, query the state information of the data block, and if the state information of the data block is that a receiving state of the data block is uncertain, retransmit the data block according to the predefined rule. The data retransmission device is disposed in the data transmitter or in other devices in the communication network, or is individually disposed in the communication network.

The state information of the data block refers to the information about whether the data block is correctly received by the receiver, and includes: the data block is correctly received, an error occurs on the data block received by the receiver, and the receiving state of the data block is uncertain.

In the system in this embodiment of the present invention, the operation that the data retransmission device retransmits the data block according to the predefined rule includes: transmitting the confirmation request information of the data block to the data receiver, and if the return information about the confirmation request information of the data block is not received or fails to be correctly analyzed when the data block in the retransmission queue meets the predefined condition, retransmitting the data block; or, transmitting the confirmation request information of the data block to the receiver, and determining whether to retransmit the data block according to the received return information about the confirmation request information of the data block; or, retransmitting the data block directly.

The data receiver is further configured to transmit the return information for the confirmation request information to the data retransmission device after receiving the confirmation request information transmitted by the data retransmission device.

In the system in this embodiment of the present invention, the data block in the retransmission queue meeting the predefined condition refers to that:
the data block reaches a predefined position in the retransmission queue;
   or,
   the data block reaches a predefined time after entering the retransmission queue;
   or,
   the data block reaches a predefined time or a predefined position in the retransmission queue after the confirmation request information of the data block is transmitted to the receiver.

One or multiple data blocks may exist, and in the case of multiple data blocks, the operation of retransmitting the data block according to the predefined rule by the data retransmission device includes selecting all or part of the data blocks for retransmission according to the predefined rule.

The above embodiments are merely exemplary specific implementation of the present invention, but not intended to limit the present invention.

## Claims

1. A method for implementing retransmission in a physical layer, comprising:
querying state information of the data block when a data block in a retransmission queue meets a predefined condition, wherein the state information of the data block refers to information obtained by analyzing return information of the data block transmitted by a receiver;
retransmitting the data block according to a predefined rule if the state information of the data block indicates that a receiving state of the data block is uncertain.

2. The method according to claim 1, wherein the receiving state of the data block comprises:
the return information of the data block transmitted by the receiver is not found;
or,
the return information of the data block transmitted by the receiver fails to be analyzed correctly.

3. The method according to claim 1 or 2, wherein the retransmitting the data block according to the predefined rule comprises:
transmitting confirmation request information of the data block to the receiver, and retransmitting the data block if return information about the confirmation request information of the data block is not received or fails to be analyzed correctly when the data block in the retransmission queue meets the predefined condition;
or,
transmitting confirmation request information of the data block to the receiver, and determining whether to retransmit the data block according to the received return information about the confirmation request information of the data block;
or,
retransmitting the data block directly.

4. The method according to claim 3, wherein the data block in the retransmission queue meeting the predefined condition refers to that:
the data block reaches a predefined position in the retransmission queue;
or,
the data block reaches a predefined time after entering the retransmission queue;
or,
the data block in the retransmission queue reaches a predefined time or a predefined position after confirmation request information of the data block is transmitted to the receiver.

5. The method according to claim 1 or 2, wherein one or multiple data blocks exist, and in the case of multiple data blocks, the retransmitting the data block according to the predefined rule comprises:
selecting all or part of the data blocks for retransmission according to the predefined rule.

6. A device for implementing retransmission in a physical layer, comprising:
a state query module, configured to query state information of a data block in a retransmission queue when the data block meets a predefined condition, wherein the state information of the data block refers to information obtained by analyzing return information of the data block transmitted by a receiver; and
an autonomous retransmission processing module, configured to retransmit the data block according to a predefined rule when the state information of the data block obtained by the state query module is that a receiving state of the data block is uncertain.

7. The device according to claim 6, wherein the state information of the data block obtained by the state query module being that the receiving state of the data block is uncertain comprises: the return information of the data block transmitted by the receiver is not found; or, the return information of the data block transmitted by the receiver fails to be analyzed correctly.

8. The device according to claim 6 or 7, wherein the autonomous retransmission processing module is configured to:
send confirmation request information of the data block to the receiver, and if the return information about the confirmation request information of the data block is not received or fails to be analyzed correctly when the data block in the retransmission queue meets the predefined condition, retransmit the data block;
or,
send confirmation request information of the data block to the receiver, and determine whether to retransmit the data block according to the return information about the confirmation request information of the data block;
or,
retransmit the data block directly.

9. The device according to claim 8, wherein the state query module comprises an analysis module, a detection module, and a query execution module,
the analysis module is configured to analyze the return information of the data block or the return information about the confirmation request information of the data block, and update the state information of the data block,
the detection module is configured to trigger the query execution module when the data block in the retransmission queue meets the predefined condition, the data block in the retransmission queue meeting the predefined condition refers to that the data block reaches a predefined position in the retransmission queue, or the data block reaches a predefined time after entering the retransmission queue, or the data block in the retransmission queue reaches a predefined time or a predefined position after the confirmation request information of the data block is transmitted to the receiver, and
the query execution module is configured to query the state information of the data block updated by the analysis module.

10. The device according to claim 6 or 7, wherein one or multiple data blocks exist, and in the case of multiple data blocks, the autonomous retransmission processing module is configured to select all or part of the data blocks for retransmission according to the predefined rule.

11. A digital subscriber line (DSL) communication system, comprising:
a data transmitter, configured to transmit a data block to a data receiver;
a data receiver, configured to receive the data block transmitted by the data transmitter, and transmit return information of the data block to the data transmitter; and
a data retransmission device, configured to obtain the return information of the data block, and obtain state information of the data block by analyzing the return information of the data block, query state information of the data block when it is detected that the data block in a retransmission queue meets a predefined condition, and retransmit the data block according to a predefined rule when the state information of the data block is that a receiving state is uncertain.

12. The system according to claim 11, wherein the retransmitting, by the data retransmission device, the data block according to the predefined rule comprises: transmitting confirmation request information of the data block to the receiver, and if return information about the confirmation request information of the data block is not received or fails to be analyzed correctly when the data block in the retransmission queue meets the predefined condition, retransmitting the data block; or, transmitting confirmation request information of the data block to the receiver, and determining whether to retransmit the data block according to the received return information about the confirmation request information of the data block; or, retransmitting the data block directly; and
the data receiver is further configured to transmit return information for the confirmation request information to the data retransmission device after receiving the confirmation request information transmitted by the data retransmission device.

13. The system according to claim 12, wherein the data block in the retransmission queue meeting the predefined condition refers to that:
the data block reaches a predefined position in the retransmission queue;
or,
the data block reaches a predefined time after entering the retransmission queue;
or,
the data block reaches a predefined time or a predefined position in the retransmission queue after the confirmation request information of the data block is transmitted to the receiver.

14. The system according to claim 11, wherein one or multiple data blocks exist, and in the case of multiple data blocks, the retransmitting the data block according to the predefined rule comprises:
selecting all or part of the data blocks for retransmission according to the predefined rule.
